# EUROPÄISCHE PATENTSCHRIFT

(11) **EP 1 557 547 B1**
(45) Veröffentlichungstag und Bekanntmachung des Hinweises auf die Patenterteilung: **12.01.2011**
(21) Anmeldenummer: 04011623.8
(22) Anmeldetag: 15.05.2004
(51) Int. Cl.: F02D 9/10, F16H 1/16, F16H 35/00, F02D 11/10

(54) **Stellvorrichtung**
Actuating device
Dispositif d'actionnement

(30) Priorität: 24.01.2004 DE 102004003665
(43) Veröffentlichungstag der Anmeldung: 27.07.2005
(73) Patentinhaber: Pierburg GmbH, 41460 Neuss (DE)
(72) Erfinder: Ludwig, Norbert, 41370 Brüggen (DE); Bürger, Frank, 52355 Düren (DE); Sanders, Michael, 41564 Koblenz (DE); Peiffer, Christoph, 41363 Jüchen (DE)
(74) Vertreter: Patentanwälte ter Smitten

(56) Entgegenhaltungen:
- WO-A-03/087459
- DE-A1- 4 309 904
- JP-A- 59 166 870
- US-A- 5 657 667

## Beschreibung

Die Erfindung betrifft eine Stellvorrichtung mit einer Antriebseinheit, welche einen Elektromotor und eine vom Elektromotor angetriebene Antriebswelle aufweist, und mit einer von der Antriebswelle angetriebenen Getriebeeinheit, welche zumindest eine auf einer Schneckenwelle angeordnete Schnecke aufweist, die mit einem Schneckenrad kämmt, sowie einer mit der Getriebeeinheit gekoppelten Abtriebswelle, welche mit einem anzutreibenden Bauteil direkt oder indirekt gekoppelt ist und üblicherweise durch eine Öffnung eines Gehäuses, welches die Stellvorrichtung umgibt, nach außen ragt, wobei die Drehung der Antriebseinheit üblicherweise untersetzt auf das anzutreibende Bauteil übertragbar ist.

Derartige elektromotorische Stellvorrichtungen werden in einer Vielzahl von Anmeldungen beschrieben und beispielsweise zur Verstellung von Klappen in Verbrennungskraftmaschinen verwendet.

So beschreibt die DE 196 07 285 A1 eine gattungsgemäße Stellvorrichtung, welche als Umschalteinrichtung ausgeführt ist, bei der eine Schnecke auf der Antriebswelle eines Elektromotors angeordnet ist, welche mit einem Schneckenrad kämmt, das wiederum auf einer Abtriebswelle angeordnet ist, so dass die Drehung des Elektromotors über die Schnecke und das Schneckenrad, welche gemeinsam die Getriebeeinheit bilden, auf die Abtriebswelle untersetzt übertragen wird. Auf der Abtriebswelle ist dabei eine Klappe angeordnet, welche in eine einen fluidführenden Kanal verschließende oder öffnende Stellung fahrbar ist. Die jeweiligen Endlagen der Klappe werden dabei durch Anschläge definiert, welche in dem durch die Klappe abzusperrenden Kanal angeordnet sind, so dass der Klappenkörper in den Endlagen jeweils gegen diese Anschlagflächen anliegt.

In der DE 43 09 904 wird des weiteren eine Stellvorrichtung offenbart, bei der der Anschlag zwischen der Schnecke und einer zusätzlichen an dem Schneckenrad angeordneten Anschlagfläche erfolgt, wobei diese Anschläge in radialer Richtung oder in Umfangsrichtung zur Schneckenwelle erfolgen, die Schnecke fest auf der Welle angeordnet ist und die Schneckenwelle in Axialrichtung unverschieblich gelagert ist.

In der Druckschrift WO 03 087459 A1 wird eine Stellvorrichtung offenbart, bei der die auf Schneckenrad angebrachten Andrückflächen in Form einer Zunge ausgebildet sind und an Ihrem distalen Ende spitz zulaufend geformt sind. Ferner sind die Zungen biegsam, und damit die Andrückflächen nachgiebig. Als schneckenseitigie Anschlafläche ist ein Nocken an der Schneckenwelle vorgesehen. Das Anschlagen der Zunge an dem Nocken erfolgt in tangentialer Richtung, wobei die Federzunge nachgibt und erst in der Endposition das Schneckenrad blockiert.

Es ist ebenfalls bekannt, das Schneckenrad lediglich als Schneckenradsegment auszuführen, welches zur Festlegung der Endstellungen der Klappe gegen Anschlagflächen, die in einem Gehäuse der Stellvorrichtung ausgebildet sind, anliegt.

Allen bekannten Ausführungen ist es jedoch gemeinsam, dass durch den immer vorhandenen Nachlauf des Elektromotors aufgrund seiner Schwungmasse und somit der Schnecke ein Verbiss zwischen Schneckenrad und Schnecke erfolgen kann, der gegebenenfalls durch den Motor der Stellvorrichtung nicht mehr lösbar ist, so dass ein Funktionsausfall der Stellvorrichtung die Folge ist.

Es ist Aufgabe der Erfindung eine Stellvorrichtung bereit zu stellen, bei der ein Verspannen zwischen Schnecke und Schneckenrad durch den Nachlauf der Schwungmasse des Motors nach Abschalten und der daraus folgende Verbiss zwischen Schnecke und Schneckenrad zuverlässig vermieden wird.

Die Lösung der Aufgabe erfolgt erfindungsgemäß durch die Merkmale des Anspruchs 1.

Erfindungsgemäß weist die Stellvorrichtung an dem Schneckenrad zumindest eine Andrückfläche auf. Die Andrückfläche liegt in zumindest einer der Endstellungen der Stellvorrichtung in Achsrichtung der Schneckenwelle an einer korrespondierenden Anschlagfläche an. Hierdurch wird in zumindest einer der Endstellungen eine axiale Kraft auf die Schnecke von dem Schneckenrad übertragen. Hierdurch wird die Schnecke zusammen mit der Schneckenwelle oder die Schnecke auf der Schneckenwelle durch den Anschlag gebremst, wobei die Anschlagfläche und somit vorzugsweise auch die Schnecke vorzugsweise axial verschoben wird. Hierdurch wird der Nachlauf der Schnecke und somit des Motors verkürzt. Dies hat zur Folge, dass ein Verbeißen zwischen der Schnecke und dem Schneckenrad zuverlässig vermieden ist. Hierdurch kann die Lebensdauer und die Zuverlässigkeit der Funktionsweise der Stellvorrichtung erhöht werden. Des Weiteren ist bei geringem Raumbedarf die Einfachheit im Aufbau durch eine kostengünstige Herstellbarkeit gewährleistet.

Bei einer ersten bevorzugten Ausführungsform ist die Anschlagfläche an der Schnecke oder der Schneckenwelle angeordnet, wobei die Schnecke und/ oder die Schneckenwelle axial verschiebbar gelagert ist. Gegen die Anschlagfläche drückt in zumindest einer, vorzugsweise in beiden Endstellungen der Stellvorrichtung die an dem Schneckenrad, das vorzugsweise als Schneckenradsegment ausgebildet ist, vorgesehene Andrückfläche. Bei einer solchen Anordnung wird die Schnecke mit ihrer Schneckenwelle oder die Schnecke auf der Schneckenwelle durch den Anschlag gebremst und in Axialrichtung verschoben, so dass der Nachlauf der Schnecke und somit des Motors verkürzt wird und ein Verbeißen zwischen der Schnecke und dem Schneckenrad zuverlässig vermieden wird. Durch den axialen Anschlag wird außerdem ein Querverspannen der Antriebswelle bzw. der Schneckenwelle vermieden.

In einer bevorzugten Ausführungsform ist die zumindest eine an der Schnecke oder der Schneckenwelle angeordnete Anschlagfläche im wesentlichen ringförmig und konzentrisch um die Schneckenwelle verlaufend ausgebildet, so dass beim Zusammenbau des Getriebes die Stellung zwischen Schnecke und Schneckenrad nicht aufeinander abgestimmt werden muss. Dies vereinfacht die Montage.

In einer weiterführenden Ausführungsform ist die zumindest eine am Schneckenrad oder am Schneckenradsegment angeordnete Andrückfläche als Nase an einem Vorsprung ausgebildet, welcher sich an dem in Umfangsrichtung des Schneckenrades/ Schneckenradsegmentes angeordneten Ende im wesentlichen in radialer Richtung erstreckt. Hierdurch ist eine Einteiligkeit der Andrückfläche und des Schneckenrades gewährleistet, wobei der Herstellungsprozess kostengünstig in einem Schritt durchführbar ist. Dies wird auch durch die einfache Form der Andrückfläche erreicht.

In einer dazu weiterführenden Ausführungsform weist zumindest ein Lager der Schneckenwelle jeweils eine zum Schneckenrad gerichtete Ausnehmung auf, in die jeweils in der zumindest einen Endstellung des Schneckenrades im wesentlichen der zumindest eine Vorsprung des Schneckenrades gedreht ist, so dass der Anschlag in Achsrichtung gegen das Schneckenende erfolgt. Bei einer solchen Ausführung kann die Schnecke mit der Schneckenwelle in üblicher Weise montiert werden und es sind keine zusätzlichen Bauteile für den Anschlag erforderlich. Des weiteren wird durch die Ausnehmung am Lager die Möglichkeit geschaffen, den Vorsprung mit dem Schneckenrad bis gegen die Schneckenspindel zu drehen und diesen tatsächlich genau axial gegen das Ende der Schnecke erfolgen zu lassen, wobei gleichzeitig eine kostengünstige Ausführung verwirklicht wird.

Bei einer weiteren besonders bevorzugten Ausführungsform ist die Anschlagfläche an einem Einlegeelement vorgesehen. Hierzu weist das Einlegeelement einen Ansatz auf, der in zumindest einer der Endstellungen gegen die Schnecke drückt. Hierdurch erfolgt, wie vorstehend anhand der unmittelbar an der Schnecke oder der Schneckenwelle vorgesehenen Anschlagfläche beschrieben, ein Bremsen der Schnecke bzw. der Schneckenwelle. Das Vorsehen eines erfindungsgemäßen Einlegeelements hat den Vorteil, dass dieses auf einfache Weise in eine bestehende Stellvorrichtung integriert werden kann. Insbesondere ist es möglich, das Einlegeelement derart auszubilden, dass die an dem Schneckenrad, insbesondere dem Schneckenradsegment vorgesehene Andrückfläche bzw. die vorgesehenen Andrückflächen möglichst einfach angeordnet und ausgebildet werden können. Dies kann insbesondere fertigungstechnische Vorteile haben.

Vorzugsweise ist die zumindest eine Andrückfläche an einer Unterseite des Einlegeelements insbesondere innerhalb des Zahnkranzes des Schneckenrades bzw. Schneckenradsegments angeordnet. Insbesondere hat das Vorsehen eines Einlegeelements den Vorteil, dass durch das Vorsehen unterschiedlicher Einlegeelemente auf einfache Weise unterschiedliche Endstellungen definiert werden können.

Das Einlegeelement weist vorzugsweise zwei Fortsätze auf und ist somit im Wesentlichen U-förmig ausgebildet. Die beiden Fortsätze sind in eingebautem Zustand an einander gegenüberliegenden Seiten der Schnecke angeordnet. Hierbei ist jeder Fortsatz dazu vorgesehen, in jeweils einer der beiden Endstellungen gegen die Schnecke zu drücken. Durch das Vorsehen eines Einlegeelements mit vorzugsweise zwei Ansätzen, die auf beiden Seiten der Schnecke angeordnet sind, ist es möglich, Anlaufscheiben, gegen die eine axial verschiebbare Schnecke aniäuft, zu ersetzen.

Vorzugsweise ist die Schnecke zumindest drehfest auf der Antriebswelle und das Schneckenrad zumindest drehfest auf der Abtriebswelle angeordnet und für beide Endstellungen der Stellvorrichtung sind korrespondierende Anschlagflächen an der Schnecke und Andrückflächen an dem Schneckenradsegment ausgeführt. Dies begrenzt den notwendigen Platzbedarf erheblich, legt zwei Endstellungen fest, wobei in beiden Endstellungen ein Verbiss vermieden wird und eine kostengünstige Stellvorrichtung geschaffen wird.

Durch diese Ausführungsformen erhöht sich die Lebensdauer einer solchen einfachen und kostengünstig ausgeführten Stellvorrichtung erheblich und es treten durch die Vermeidung einer Verspannung zwischen Schneckenrad und Schnecke deutlich weniger Fehlfunktionen einer solchen Stellvorrichtung auf.

In den Zeichnungen sind Stellvorrichtungen dargestellt, die nachfolgend beschrieben werden.
Figur 1 zeigt in Seitenansicht eine Stellvorrichtung mit geöffnetem Gehäuse gemäß des Standes der Technik.
Figur 2 zeigt in Seitenansicht eine Getriebeeinheit einer ersten Ausführungsform einer erfindungsgemäßen Stellvorrichtung.
Figur 3 zeigt in Seitenansicht eine Getriebeeinheit einer zweiten Ausführungsform einer erfindungsgemäßen Stellvorrichtung.
Figur 4 zeigt in schematischer, perspektivischer Ansicht das in der zweiten Ausführungsform eingesetzte Einlegeelement.

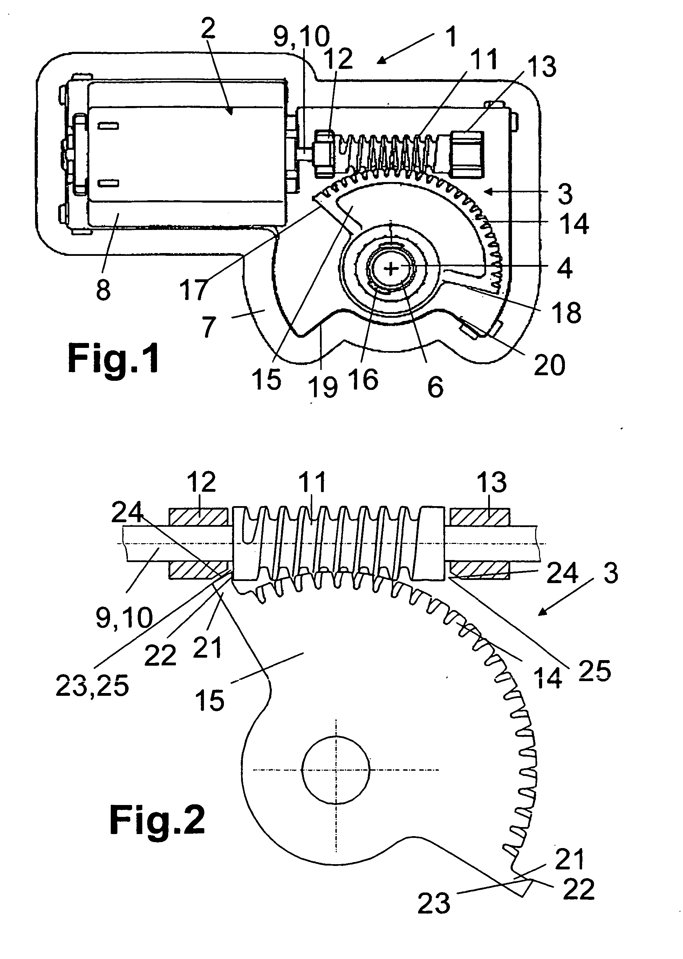

Figur 1 zeigt eine Stellvorrichtung 1, weiche beilspielsweise als Auf-, Zusteller für Schaltklappen eines längenschaltbaren Luftansaugkanalsystems verwendet wird.

Die Stellvorrichtung 1 besteht aus einer Antriebseinheit 2, die mit einer nicht dargestellten Steuerung zum Abschalten der Antriebseinheit 2 verbunden ist, und über welche eine Getriebeeinheit 3 angetrieben wird, die wiederum mit einer Abtriebswelle 4 gekoppelt ist, auf welcher sich entweder ein nicht dargestelltes anzutreibendes Bauteil, beispielsweise eine oder mehrere Schaltklappen befinden oder welche mit einer entsprechenden nicht dargestellten Stellwelle direkt gekoppelt ist. Die Abtriebswelle 4 ragt dabei durch eine Öffnung 6, welche in einem die gesamte Stellvorrichtung 1 umgebenden Gehäuse 7, welches hier geöffnet dargestellt ist, angeordnet ist.

Die Antriebseinheit 2 besteht im vorliegenden Ausführungsbeispiel aus einem Elektromotor 8 sowie einer von dem Elektromotor 8 direkt angetriebenen Antriebswelle 9. Die Antriebswelle 9 dient gleichzeitig als Schneckenwelle 10, auf der eine Schnecke 11 angeordnet ist, die in zwei Lagern 12, 13, welche am Gehäuse 7 befestigt sind, drehbar gelagert ist. Die beiden Lager 12,13 sind als Los- Festlager ausgeführt. Die Schnecke 11 steht im Eingriff mit den Zähnen 14 eines Schneckenrades 15, welches im vorliegenden Ausführungsbeispiel als Schneckenradsegment ausgeführt ist. Dieses Schneckenradsegment 15 ist drehfest auf der Abtriebswelle 4 angeordnet. Diese Drehfestigkeit wird im Ausführungsbeispiel über eine Nut- Federverbindung 16 hergestellt. In der Stellvorrichtung gemäß des Standes der Technik bilden die in Umfangsrichtung gesehenen Enden des Schneckenradsegmentes 15 Anschlagflächen 17, 18, welche in den beiden Endstellungen der Stellvorrichtung 1 gegen im Gehäuse 7 angeordnete Anschlagflächen 19, 20 anliegen. Durch den Nachlauf des Motors 8 und somit der Antriebswelle 9 und der Schnecke 11 entsteht jedoch ein Verbiss zwischen der Schnecke 11 und dem Schneckenradsegment 15.

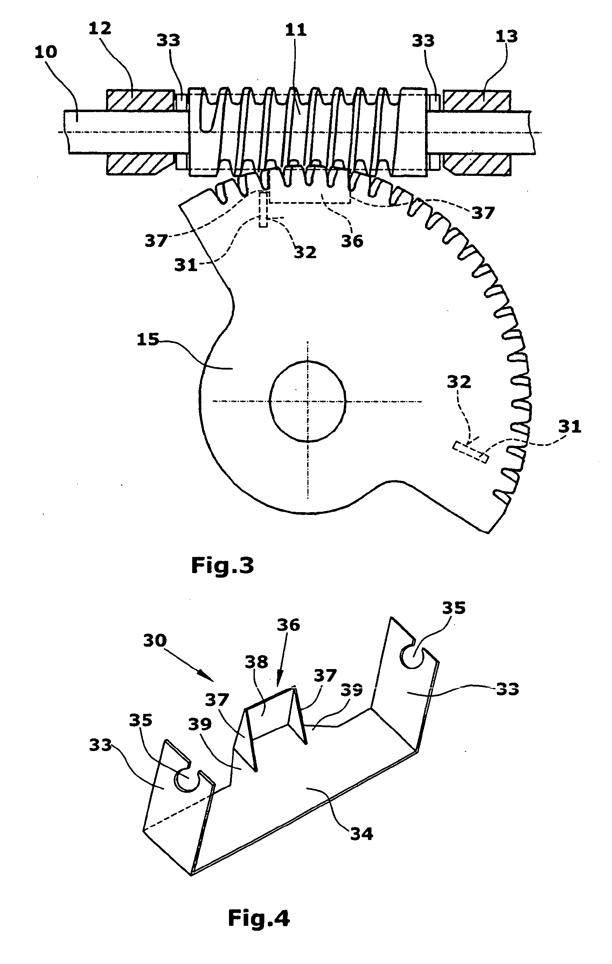

Ein solcher Verbiss wird durch eine erste Ausführung der Stellvorrichtung 1 mit einer Getriebeeinheit 3 gemäß Figur 2 sowie eine zweite Ausführungsform gemäß Figuren 3 und 4 vermieden.

Die jeweiligen Anschläge erfolgen in der ersten Ausführungsform nicht mehr über die Anschlagflächen 19, 20 im Gehäuse 7, sondern das Schneckenradsegment 15 ist so ausgeführt, dass es an seinen in Umfangsrichtung gesehenen Enden je einen in Radialrichtung weisenden Vorsprung 21 aufweist. An diesen Vorsprüngen 21 ist jeweils eine Nase 22 ausgeführt, deren zur Schnecke 11 weisende Fläche als Andrückfläche 23 dient, wobei die Andrückflächen 23 der Nasen derart in einem Winkel zum Radius des Schneckenrades stehen, dass eine Normale auf die Andrückfläche 23 der Nase 22 in Achsrichtung der Schneckenwelle 10 verläuft. Zur Verwirklichung eines solchen Anschlags weisen die Lager 12, 13 der Stellvorrichtung 1 je eine Ausnehmung 24 auf, durch die der Vorsprung 21 und somit die Nase 22 des Schneckenrades 15 gedreht werden kann, so dass der Anschlag wie in Figur 2 dargestellt direkt und in axialer Richtung gegen die Schnecke 11 erfolgt. Diese korrespondierenden Anschlagflächen 25 an der Schnecke 11 verlaufen ringförmig und konzentrisch um die Antriebswelle 9, welche wiederum gleichzeitig als Schneckenwelle 10 dient. Um auf diese Weise einen Verbiss zwischen Schnecke 11 und Schneckenradsegment 15 zu verhindern, ist der Abstand zwischen den beiden Lagern 12, 13 größer als die Längenausdehnung der Schneckenspindel 11. Es besteht für die Schneckenwelle 10 eine Los- Loslagerung, so dass sie beim Nachlauf des Motors 8 leicht in Achsrichtung der Schneckenwelle 10 verschoben werden kann. Die Schnecke 11 ist dabei fest auf der Schneckenwelle 10 befestigt, wobei auch eine Lösung denkbar ist, bei der die Schnecke 11 sich auf der Schneckenwelle 10 in Achsrichtung verschieben kann und nicht wie im Ausführungsbeispiel die gesamte Schneckenwelle 10 mit der Schnecke 11 beim Anschlag leicht verschoben wird.

Im einzelnen funktioniert die Stellvorrichtung 1 in der Weise, dass die bei Drehung des Elektromotors 8 diese Drehung auf die Antriebswelle 9 übertragen wird. Durch die zumindest drehfeste Anordnung der Schnecke 11 auf der Antriebswelle 9 dreht sich die Schnecke 11 mit gleicher Geschwindigkeit wie der Elektromotor 8. Über den Eingriff der Schneckenspindel 11 in die Zähne 14 des Schneckenrades 15 wird die Drehung der Schnecke 11 in eine Drehung des Schneckenradsegmentes 15 untersetzt übertragen, wobei die Abtriebswelle 4, auf der das Schneckenradsegment 15 drehfest befestigt ist, im rechten Winkel zur Achsrichtung der Schneckenwelle 10 angeordnet ist. Diese Drehung der Abtriebswelle wird nun beispielsweise auf den nicht dargestellten Klappenkörper, der auf der Abtriebswelle 4 angeordnet ist, übertragen, wobei die Drehung durch die Untersetzung deutlich langsamer ist, als die Drehung des Elektromotors 8. Die Größe des Teilkreises des Schneckenradsegmentes 15 entspricht dabei im wesentlichen dem Verstellwinkel beispielsweise der Klappenvorrichtung.

Wird nun eine der Endstellungen erreicht und über eine nicht dargestellte Positionserfassungseinrichtung erfasst, gibt die Steuerung dem Elektromotor 8 das Signal zu stoppen. Etwa gleichzeitig schlägt eine der Andrückflächen 23 des Schneckenradsegmentes 15 gegen eine der Anschlagflächen 25 der Schnecke 11. Durch den Nachlauf des Motors 8, der abhängig ist von der angetriebenen Last und der Schwungmasse im Motor 8, läuft dieser nach. Dieser Nachlauf wird durch den Anschlag der Nasen 22 gegen die Schnecke 11 verkürzt, da das Schneckenradsegment die Schnecke und somit den Motor abbremst, wobei gleichzeitig, um einen Verbiss durch diese Bremsung zu vermeiden die Schneckenwelle 10 zwischen den Lagern 12,13 leicht verschoben wird. Soll nun die andere Stellung des zu verstellenden Bauteils 5 angefahren werden, so wird der Elektromotor 8 über die Steuerung in entgegengesetzter Drehrichtung angetrieben bis erneut ein Steuersignal zum Stoppen des Motors 8 ausgegeben wird und der Anschlag an der entgegengesetzten Seite erfolgt.

Die zweite bevorzugte Ausführungsform der Erfindung (Figuren 3 und 4) arbeitet prinzipiell nach demselben, anhand der Figur 2 beschriebenen erfindungsgemäßen Prinzip. Insofern sind in Figur 3 und 4 gleiche sowie ähnliche Bauteile mit denselben Bezugszeichen gekennzeichnet.

Der wesentliche Unterschied der zweiten Ausführungsform besteht darin, dass anstelle der an der Schnecke 11 vorgesehenen Anschlagfläche 25 ein Einlegeelement 30 (Figur 4) vorgesehen ist. Ferner sind anstatt der am Schneckenrad 15 vorgesehenen Vorsprünge 21, die die Andrückflächen 23 aufweisen, an einer Unterseite bzw. Stirnseite des Schneckenradsegmentes 15 Ansätze 31 vorgesehen, die jeweils eine Andrückfläche 32 aufweisen. Das Einlegeelement 30 ist U-förmig ausgebildet und weist zwei einander gegenüberliegende Fortsätze 33 auf, die gegenüber eine Grundplatte 34 rechtwinklig sind. Die beiden Fortsätze 33 weisen jeweils eine Aussparung 35 auf, durch die die Schneckenwelle 10 geführt ist.

Die Grundplatte 34 weist einen Ansatz 36 auf, der in eingebautem Zustand unterhalb des Schneckenradsegmentes 15 bzw. auf derjenigen Seite des Schneckenrades 15 angeordnet ist, auf der die Ansätze 31 vorgesehen sind. Der Ansatz 36 ist derart ausgebildet, dass je Endstellung eine Anschlagfläche 37 vorgesehen ist. Über das Zwischenelemente 38, 39 erfolgt eine feste Verbindung des Ansatzes 36 mit der Grundplatte 34.

In einer Endstellung, wie sie beispielsweise in Figur 3 dargestellt ist, drückt somit eine Andrückfläche 32 gegen eine an dem Ansatz 36 des Einlegeelementes 30 vorgesehene Anschlagfläche 37. Hierdurch wird das Einlegeelement 30 in Figur 3 nach rechts verschoben, so dass der linke Fortsatz 33 des Einlegeelementes 30 gegen die Schnecke 11 gedrückt wird und diese axial in Figur 3 nach rechts verschiebt.

Eine derartig ausgeführte Stellvorrichtung entsprechend der erfindungsgemäßen Ausführungsbeispiele verhindert zuverlässig einen Verbiss zwischen der Schnecke und dem Schneckenrad in den jeweiligen Anschlagstellungen bzw. Endstellungen der Stellvorrichtung und benötigt gleichzeitig aufgrund der extrem einfach gewählten Bauform sehr wenig Raum. Gleichzeitig ist sie aufgrund der geringen Bauteileanzahl einfach zu montieren und kostengünstig herzustellen.

Es wird deutlich, dass auch anders ausgeführte Stellvorrichtungen beispielsweise mit einem umfangreicheren Getriebe beziehungsweise Stellvorrichtungen mit denen beliebig viele Stellungen angefahren werden sollen, bei denen lediglich auf die erfindungsgemäße Weise ein Verbiss zwischen einer Schnecke und einem Schneckenrad vermieden werden soll, in den Schutzbereich des Hauptanspruchs fallen. Auch die Ausführung der Anschlagflächen zwischen Schneckenrad und Schnecke können je nach Anwendung unterschiedlich gewählt werden, beispielsweise kann der Anschlag vom Schneckenrad auch lediglich gegen einen zusätzlich ausgeführten Anschlag an der Schneckenwelle erfolgen, wobei die Verwirklichung einer axial zur Schneckenwelle verlaufenden Anschlagskraft sowie die leichte Verschiebbarkeit gegeben sein müssen.

## Patentansprüche

1. Stellvorrichtung mit einer Antriebseinheit, welche einen Elektromotor (2) und eine vom Elektromotor (2) angetriebene Antriebswelle (9) aufweist, und mit einer von der Antriebswelle (9) angetriebenen Getriebeeinheit, welche zumindest eine auf einer Schneckenwelle (10) angeordneten Schnecke (11) aufweist, die mit einem Schneckenrad (15) kämmt, sowie einer mit der Getriebeeinheit gekoppelten Abtriebswelle (4), welche mit einem anzutreibenden Bauteil direkt oder indirekt gekoppelt ist, wobei durch Drehung der Antriebseinheit die Stellvorrichtung in zumindest eine Endstellung bringbar ist, wobei das Schneckenrad (15) zumindest eine Andrückfläche (23, 32) aufweist, welche in zumindest einer der Endstellungen der Stellvorrichtung (1) an einer korrespondierenden Anschlagfläche (25,37) anliegt **dadurch gekennzeichnet, dass** die Andrückfläche in Achsrichtung der Schneckenwelle (10) an der Korrespondierenden Anschlagfläche (25, 37) anliegt, und eine Axialkraft auf die Schnecke (11) überträgt.

2. Stellvorrichtung nach Anspruch 1, **dadurch gekennzeichnet, dass** die Anschlagfläche (25, 37) in Längsrichtung der Schnecke (11) verschiebbar ist.

3. Stellvorrichtung nach Anspruch 1 oder 2, **dadurch gekennzeichnet, dass** die Anschlagfläche (25) an der Schnecke (11) oder der Schneckenwelle (10) angeordnet ist, wobei die Schnecke (11) oder die Schneckenwelle (10) axial verschiebbar gelagert ist.

4. Stellvorrichtung nach einem der Ansprüche 1 - 3, **dadurch gekennzeichnet, dass** die Anschlagfläche (25) an der Schnecke (11) oder der Schneckenwelle (10) angeordnet ist und im wesentlichem ringförmig und konzentrisch um die Schneckenwelle (10) verlaufend ausgebildet ist.

5. Stellvorrichtung nach einem der Ansprüche 1 - 4, **dadurch gekennzeichnet, dass** die zumindest eine an einem Schneckenradsegment (15) angeordnete Andrückfläche (23) als Nase (22) an einem Vorsprung (21) ausgebildet ist, welcher sich an dem in Umfangsrichtung des Schneckenradsegmentes (15) angeordneten Ende im wesentlichen in radialer Richtung erstreckt.

6. Stellvorrichtung nach einem der vorhergehenden Ansprüche, **dadurch gekennzeichnet, dass** zumindest ein Lager (12, 13) der Schneckenwelle (10) jeweils eine zum Schneckenrad (15) gerichtete Ausnehmung (24) aufweist, in die jeweils in der zumindest einen Endstellung eines Schneckenradsegmentes (15) im wesentlichen zumindest eine Vorsprung (21) des Schneckenradsegmentes (15) gedreht ist, so dass der Anschlag in Achsrichtung gegen ein Schneckenende (25) erfolgt.

7. Stellvorrichtung nach Anspruch 1 oder 2, **dadurch gekennzeichnet, dass** die Anschlagfläche (37) an einem Einlegeelement (30) vorgesehen ist, das zumindest einen in einer der Endstellung gegen die Schnecke (11) drückenden Fortsatz (33) aufweist.

8. Stellvorrichtung nach Anspruch 7, **dadurch gekennzeichnet, dass** die Anschlagfläche (37) innerhalb eines Zahnkranzes des Schneckenrades (15) angeordnet ist.

9. Stellvorrichtung nach Anspruch 7 oder 8, **dadurch gekennzeichnet, dass** das Einlegeelement (30) zwei Fortsätze (33) aufweist, die an einander gegenüberliegenden Seiten der Schnecke (11) angeordnet sind.

10. Stellvorrichtung nach einem der Ansprüche 7 - 9, **dadurch gekennzeichnet, dass** der Fortsatz bzw. die Fortsätze (33) eine Aussparung (35) aufweisen, durch die die Schneckenwelle (10) verläuft.

11. Stellvorrichtung nach einem der Ansprüche 7 - 10, **dadurch gekennzeichnet, dass** der Fortsatz bzw. die Fortsätze (33) eine bzw. beide Anlaufscheiben ersetzen, die jeweils zwischen der Schnecke (11) und einem Lager (12, 13) vorgesehen sind.

12. Stellvorrichtung nach einem der Ansprüche 1 - 11, **dadurch gekennzeichnet, dass** das Schneckenrad (15) als Schneckenradsegment ausgebildet ist.

13. Stellvorrichtung nach einem der Ansprüche 1 - 12, **dadurch gekennzeichnet, dass** je Endstellung eine Anschlagfläche (25, 37) vorgesehen ist, die jeweils mit je einer Andrückfläche (23, 32) korrespondiert.

14. Stellvorrichtung nach einem der vorhergehenden Ansprüche, **dadurch gekennzeichnet, dass** die Schnecke (11) zumindest drehfest auf der Antriebswelle (9) und das Schneckenrad bzw. Schneckenradsegment (15) zumindest drehfest auf der Abtriebswelle (4) angeordnet ist und für beide Endstellungen der Stellvorrichtung (1) korrespondierende Anschlag- bzw. Andrückflächen (23,25;32,37) an der Schnecke (11) und dem Schneckenradsegment (15) ausgeführt sind.

## Claims

1. An actuating device comprising a drive unit having an electric motor (2) and an input shaft (9) driven by the electric motor (2), and comprising a transmission unit including at least a worm gear (11) arranged on a worm gear shaft (10), meshing with a worm wheel (15), as well as an output shaft (6) coupled with the transmission unit, said output shaft being directly or indirectly coupled with a component to be driven, said actuating device being adapted to be moved at least into an end position by rotation of the drive unit, wherein said worm wheel (15) comprises at least one pressure surface (23, 32) which abuts against a corresponding stop surface (25, 37) in at least one of the end positions of the actuating device (1),
**characterized in that**
said pressure surface (23, 32) abuts against said corresponding stop surface (25, 37) in the axial direction of the worm gear shaft (10) and transmits an axial force onto the worm gear (11).

2. The actuating device of claim 1, **characterized in that** the stop surface (25, 37) is displaceable in the longitudinal direction of the worm gear (11).

3. The actuating device of claim 1 or 2, **characterized in that** the stop surface (25) is provided on the worm gear (11) or the worm gear shaft (10), said worm gear (11) or said worm gear shaft (10) being supported in an axially displaceable manner.

4. The actuating device of one of claims 1 - 3, **characterized in that** the stop surface (25) is provided on the worm gear (11) or the worm gear shaft (10) and is formed such that it extends substantially annularly and concentrically around the worm gear shaft (10).

5. The actuating device of one of claims 1 - 4, **characterized in that** the at least one pressure surface (23) provided on a worm wheel segment (15) is formed as a nose (22) on a projection (21) that extends substantially radially at the end arranged in the circumferential direction of the worm wheel segment (15).

6. The actuating device of one of the preceding claims, **characterized in that** at least one bearing of the worm gear shaft (10) respectively comprises a recess (24) directed towards the worm wheel (15), into which, in the at least one end position of a worm wheel segment (15), substantially at least one projection (21) of the worm wheel segment (15) is rotated so that the abutment is effected in the axial direction against one end of the worm gear (25).

7. The actuating device of claim 1 or 2, **characterized in that** the stop surface (37) is provided on an insert element (30) comprising at least a projection (33) pressing against the worm gear (11) in one of the end positions.

8. The actuating device of claim 7, **characterized in that** the stop surface (37) is arranged within the gear rim of the worm wheel (15).

9. The actuating device of claim 7 or 8, **characterized in that** the insert element (30) has two projections (33) provided on two opposite sides of the worm gear (11).

10. The actuating device of one of claims 7 - 9, **characterized in that** the projection or the projections (33) have a cutout (35) through which the worm gear shaft (10) passes.

11. The actuating device of one of claims 7 - 10, **characterized in that** the projection or the projections (33) replace both thrust washers respectively provided between the worm gear (11) and a bearing (12, 13).

12. The actuating device of one of claims 1 - 11, **characterized in that** the worm wheel (15) is designed as a worm wheel segment.

13. The actuating device of one of claims 1 - 12, **characterized in that** one stop surface (25, 37) is provided per end position, each surface corresponding with a respective pressure surface (23, 32).

14. The actuating device of one of the preceding claims, **characterized in that** the worm gear (11) is arranged on the input shaft (9) at least in a manner fixed for rotation therewith and the worm wheel or the worm wheel segment (15) is arranged on the output shaft (9) at least in a manner fixed for rotation therewith, and that corresponding stop and pressure surfaces (23, 25; 35, 37) are formed on the worm gear (11) and the worm wheel segment (15) for both end positions of the actuating device (1).

## Revendications

1. Dispositif d'actionnement comprenant une unité d'entrainement avant un électromoteur (2) et un arbre d'entrée (9) entrainé par ledit électromoteur (2), et comprenant une unité d'engrenage entrainée par ledit arbre d'entrée (9), ladite unité d'engrenage comprenant au moins une vis sas fin (11) prévue sur un arbre de vis sans fin (10), ladite vis sans fin étant en prise avec une roue tangente (15), et un arbre de sortie (4) couplé avec ladite unité d'engrenage, ledit arbre étant directement ou indirectement couplé avec un composant à entrainer, le dispositif d'actionnement étant apte à être déplacé au moins dans une position finale par la rotation de ladite unité d'entrainement, ladite roue tangente (15) comprenant au moins une face de pression (23, 32) qui, en au moins une position finale dudit dispositif d'actionnement (1), s'appui sur une face de butée (25, 37) correspondante,
**caractérisé en ce que**
au moins en une des positions finales dudit dispositif d'actionnement (1), ladite face de pression s'appui sur la face de butée (25, 37) correspondante dans la direction axiale dudit arbre de vis sans fin (10) et transmet une force axiale sur ladite vis sans fin (11).

2. Dispositif d'actionnement selon la revendication 1, **caractérisé en ce que** la face de butée (25, 37) est déplaçable dans la direction longitudinale de la vis sans fin (11).

3. Dispositif d'actionnement selon les revendications 1 ou 2, **caractérisé en ce que** la face de butée (25) est formée sur la vis sans fin (11) ou l'arbre de vis sans fin (10), ladite vis sans fin (11) ou ledit arbre de vis sans fin (10) étant supportés de manière déplaçable dans la direction axiale.

4. Dispositif d'actionnement selon l'une quelconque des revendications 1 - 3, **caractérisé en ce que** ladite face de butée (25) est formée sur la vis sans fin (11) ou l'arbre de vis sans fin (10) et s'étend sensiblement de manière annulaire et concentrique autour dudit arbre de vis sans fin (10).

5. Dispositif d'actionnement selon l'une quelconque des revendications 1 - 4, **caractérisé en ce que** ladite au moins une face de butée (23) formée sur un segment de roue tangente (15) est réalisée comme un nez (22) sur une saillie (21) qui s'étend sensiblement dans la direction radiale sur l'extrémité située dans la direction circonférentielle dudit segment de roue tangente (15).

6. Dispositif d'actionnement selon l'une quelconque des revendications précédentes, **caractérisé en ce qu'**au moins un palier (12, 13) dudit arbre de vis sans fin (10) présente un chanfrein (24) respectif tourné vers ladite roue tangente (15), dans lequel, dans ladite au moins une position finale d'un segment de roue tangente (15), ladite sensiblement au moins une saillie (21) du segment de roue tangente (15) est tournée de sorte que la butée est effectuée dans la direction axiale contre une extrémité de ladite vis sans fin (25).

7. Dispositif d'actionnement selon les revendications 1 ou 2, **caractérisé en ce que** la face de butée (37) est formée sur un élément d'insert (30) comprenant au moins une saillie (33) pressant contre la vis sans fin (11) dans une des positions finales.

8. Dispositif d'actionnement selon la revendication 7, **caractérisé en ce que** la face de butée (37) est prévue au sein de la couronne dentée de ladite roue tangente (15).

9. Dispositif d'actionnement selon les revendications 7 ou 8, **caractérisé en ce que** ledit élément d'insert (30) présente deux saillies (33) prévues sur des côtés opposés de ladite vis sans fin (11).

10. Dispositif d'actionnement selon l'une quelconque des revendications 7 - 9, **caractérisé en ce que** ladite saillie ou lesdites saillies (33) comprennent une échancrure (35) traversée par ledit arbre de vis sans fin (10).

11. Dispositif d'actionnement selon l'une quelconque des revendications 7 - 10, **caractérisé en ce que** ladite saillie ou lesdites saillies (33) remplacent une ou les deux disques de butée respectivement placées entre la vis sans fin (11) et un palier (12, 13).

12. Dispositif d'actionnement selon l'une quelconque des revendications 1 - 11, **caractérisé en ce que** ladite roue tangente (15) est réalisée comme un segment de roue tangente.

13. Dispositif d'actionnement selon l'une quelconque des revendications 1 - 12, **caractérisé en ce que**, pour chaque position finale, une face de butée (25, 37) est prévue, respectivement correspondant avec une face de pression (23, 32) respective.

14. Dispositif d'actionnement selon l'une quelconque des revendications précédentes, **caractérisé en ce que** ladite vis sans fin (11) est au moins fixée sur ledit arbre d'entrée (9) pour rotation avec celui et ladite roue tangente ou ledit segment de roue tangente (15) est au moins fixé sur ledit arbre de sortie (4) pour rotation avec celui, et que, pour les deux positions finales dudit dispositif d'actionnement (1), des faces de butées et des faces de pression (23, 25; 32, 37) sont respectivement formées sur ladite vis sans fin (11) et ledit segment de roue tangente (15).
